Europäisches Patentamt

European Patent Office

Office européen des brevets

(11) Publication number: **0 079 388**
**B1**

(12) **EUROPEAN PATENT SPECIFICATION**

(45) Date of publication of patent specification: **02.05.90**

(51) Int. Cl.⁵: **G 05 B 19/403**

(21) Application number: **82901441.4**

(22) Date of filing: **18.05.82**

(86) International application number:
**PCT/JP82/00178**

(87) International publication number:
**WO 82/04137 25.11.82 Gazette 82/28**

(54) **A NUMERICAL CONTROL METHOD.**

(30) Priority: **18.05.81 JP 74679/81**

(43) Date of publication of application:
**25.05.83 Bulletin 83/21**

(45) Publication of the grant of the patent:
**02.05.90 Bulletin 90/18**

(84) Designated Contracting States:
**DE FR GB**

(56) References cited:
**EP-A-0 044 192**
**JP-A-4 946 083**
**JP-A-5 343 183**
**US-A-3 812 474**

**WELDING AND METAL FABRICATION, vol. 48,
no. 10, December 1980, pages 669-671, IPC
Business Press Ltd.; K. DECKER: "Minicomputer
wipes the eye of optical gas cutting systems"**

(73) Proprietor: **FANUC LTD**
**3580, Shibokusa Aza-Komanba Oshino-mura
Minamitsuru-gun Yamanashi 401-05 (JP)**

(72) Inventor: **KISHI, Hajimu**
**Hinohirayamadai-Jutaku 1104 6-7-8, Asahigaoka
Hino-shi Tokyo 191 (JP)**
Inventor: **SEKI, Masaki**
**3-15-2-406, Takaidonishi Suginami-ku
Tokyo 168 (JP)**
Inventor: **TANAKA, Kunio**
**Nishihachioji-Haitsu C-7-9 711, Sandahigashi-cho
Hachioji-shi Tokyo 193 (JP)**
Inventor: **TAKEGAHARA, Takashi**
**Shanbohru-Hachioji 604 1-9, Myojin-cho 4-chome
Hachioji-shi, Tokyo 192 (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

This invention relates to numerical control methods.

With the spread and improved economies of microcomputers and minicomputers, it has become possible to make use of computer numerical control devices, or CNCs, in which a microcomputer or minicomputer is utilized as the operational control unit. By modifying the internal control program, a CNC can be made to suit the need for a wide variety of NC functions. Other advantages are faster operation and great accuracy. This invention relates to a numerical control method for executing numerical control through use of subprograms or user macros with which it is possible to realize the application of group technology of a wide range and high level suited to the multifarious needs of users.

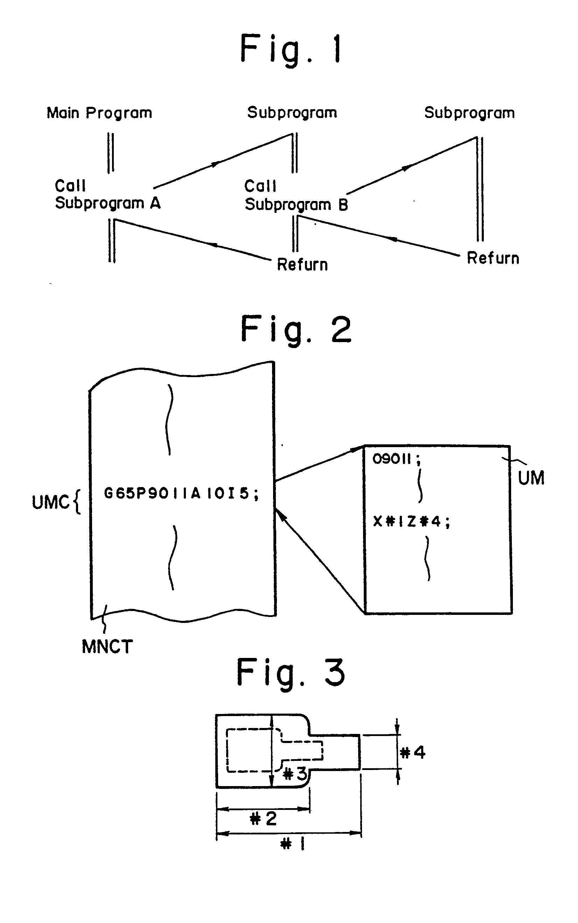

When a numerical control program contains certain fixed sequences or repeatedly appearing patterns, it is known to store these beforehand as subprograms in a memory located internally of the NC, insert subprogram call instructions in the main numerical control program, and execute numerical control processing by calling these subprograms from memory. This method is advantageous in that programming is simplified and program length reduced by a wide margin. Fig. 1 is an explanatory view useful in describing the relation between subprograms and a main program, and shows an example wherein subprograms A, B are called in multiple fashion.

It is also known to previously store a program referred to as a user macro in a memory located internally of an NC, insert a user macro call instruction UMC in the main numerical control program MNCT, as shown in Fig. 2, and execute numerical control processing by calling a predetermined user macro UM from memory. Unlike the abovementioned subprogram, a user macro can designate items such as amount of movement or tool position in the form of a variable $i$ ($i=1,2,...$).

Accordingly, in a case where workpieces have different dimensions but the same shape (i.e., where workpieces are geometrically similar), as illustrated by the solid and dashed lines in Fig. 3, a user macro need not be prepared for each workpiece the dimensions whereof differ from other workpieces; instead, only one user macro will suffice. It should be noted, however, that the user macro call instruction as well as the amount of tool movement or position based on the actual dimensions must be inserted in the main numerical control program. Thus, if a user macro is created using the variables #1 through #4 for the shape shown in Fig. 3, then user macros need not be created for respective shapes which differ from one another in terms of dimensions only (i.e., for similar Figures). The actual values for the variables #1 through #4 need only be specified by the user macro call instruction.

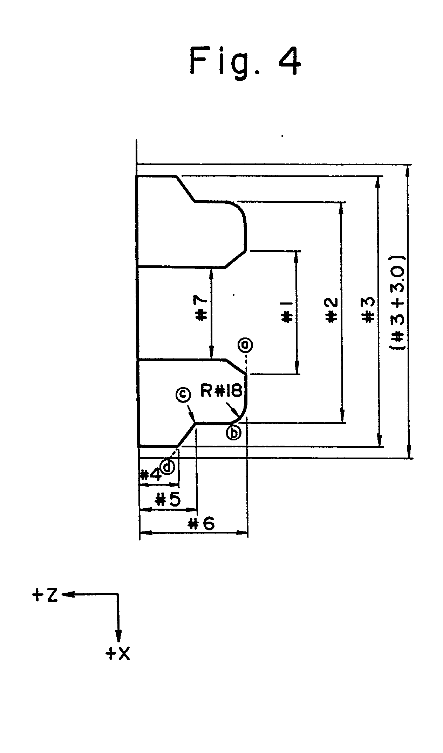

Fig. 4 is an explanatory view useful in describing a user macro and user macro call instruction.

In Fig. 4, a user macro for executing finishing work in the order ⓐ→ⓑ→ⓒ→ⓓ has the format:

| | |
|---|---|
| 09801; | (1) |
| G00X#7Z#6; | (2) |
| G01X#2R#18; | (3) |
| Z#5; | (4) |
| #23=[#3−#2+3.0]*[#4−#5]/[#3−#2];| (5) |
| X[#3+3.0]W#32; | (6) |
| M99; | (7) |

09801 indicated at (1) is the macro number which specifies the user macro. Indicated at (2) is a command for positioning a tool at point ⓐ, at (3) a command for linear machining from point ⓐ to point ⓑ, including machining for corner rounding, at (4) a command for linear machining from point ⓑ to point ⓒ, at (5) a command for computing the Z-axis component for the straight line from ⓒ to ⓓ, at (6) a command for cutting from pointⓒ to pointⓓ, and at (7) an instruction indicating the end of the user macro. The user macro call instruction inserted in the main numerical control program, on the other hand, has the following format:

G65P9801 B120.0 C150.0 D52.0
R10.0 I20.0 J30.0 K58.0

G65 is a G-function instruction indicating the user macro call instruction, P9801 is the code which specifies the user macro that is to be called, and B, C, D,..., K designate the actual dimensions. The following corresponding relationship exists between the letters of the alphabet A, B, C, D,..., K, R, W and the variables #1, #2... employed by the user macro:

A...#1, B...#2, C...#3, D...#7, I...#4,
J...#5, K...#6, R...#18, W...23

Thus, a user macro differs from a subprogram in that, if workpieces have the same shape (i.e., are geometrically similar), user macros need not be prepared for each and every such shape, even though the dimensions thereof may differ. This makes it possible to reduce the required memory capacity and to simplify programming.

As described hereinabove, therefore, subprogram and user macro functions are valuable, each having their own merits. In processing which relies upon subprograms, however, a disadvantage which arises is that, when dimensions actually to be machined differ from those in the registered subprogram, that particular subprogram cannot be used. In other words, it is necessary to create a subprogram whenever the dimensions change. In processing relying upon user macros, on the other hand, while there is no need to prepare a user macro for each set of different dimensions providing the workpiece shapes are geometrically similar, the actual dimensions must be inserted in the main numerical control program. The disadvantage encountered here, therefore, is that the main numerical control program must be remade whenever dimensions differ, though the shapes to be machined are the same.

Accordingly, the object of the present invention is to provide a numerical control method through which, if workpiece shapes are geometrically similar, only one subprogram (inclusive of ordinary subprograms and user macros) need be registered, without requiring that the main program be remade even when workpiece dimensions differ.

A relevant prior disclosure is US—A—3 812 474, which describes a numerical control method in accordance with the precharacterising part of attached claim 1. An input program for machining a part is prepared in the form of general commands representing a generic identification of a family of shapes.

Similar principles are disclosed in broad terms in pages 669 to 671 of the journal "Welding and Metal Fabrication" vol. 48, No. 10 dated December 1980.

EP—A—0 044 192 is relevant only under Article 54(3) EPC, and discloses a system for preparing numerical control information in which measures are taken to enable the system to be operated not only by an expert in computer systems, but also by anyone who can prepare or comprehend an ordinary blueprint.

According to the present invention there is provided a numerical control method wherein an input program conforming to a machining shape is entered, all or a portion of numerical values in said input program being designated by variables, and an executable program is perfected from said input program by entering a variable value corresponding to each of said variables in accordance with a desired final shape, numerical control program processing being executed on the basis of the perfected program, characterised in that the input program is a subprogram which is stored beforehand and conforms to a predetermined machining shape and the subprogram is called, during machining which is numerically controlled by a main numerical control program, in response to a call instruction inserted in the main numerical control program for that purpose, the call instruction also causing the predetermined machining shape and said variables to be displayed on a screen thereby to facilitate the entering of the variable values, numerical control processing being resumed on the basis of the subprogram when the subprogram has been perfected as aforesaid to define a machining shape which has a similar geometrical shape to the predetermined machining shape.

Owing to such an arrangement, it suffices to register only one subprogram for workpieces having a similar geometrical shape, and it is unnecessary to create main programs for each of such workpieces even though the dimensions thereof may differ.

Brief description of the drawings

Fig. 1 is an explanatory view useful in described processing based on a subprogram in accordance with the prior art; Figs. 2, 3 and 4 are explanatory views useful in describing processing based on a user macro in accordance with the prior art; Fig. 5 is a block diagram of a numerical control device for realizing the present invention; and Fig. 6 is an explanatory view useful in describing a numerical control method according to the present invention.

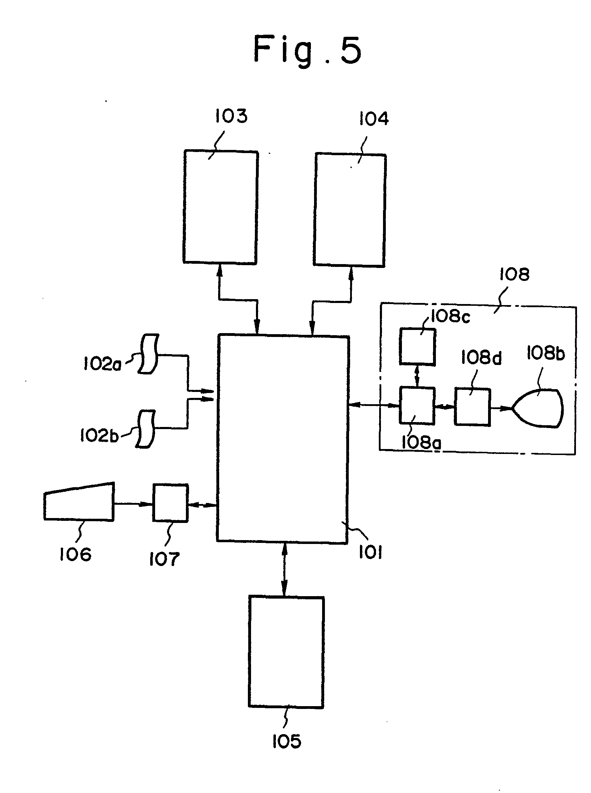

In the Figure 5, numeral 101 denotes a controller and processor unit, 102a a paper tape bearing a punched main numerical control program, 102b a paper tape bearing user macros, 103 a memory for storing the numerical control program read in from the paper tape 102a, 104 a user macro registration memory for storing a number of user macros read in from the paper tape 102b, and 105 a shape data memory for storing display data indicative of shape patterns in accordance with each of the user macros. As will be described hereinbelow, display data indicative of a predetermined shape pattern is read out of the shape memory 105 by a user macro call instruction and is delivered to a graphic display unit, described later, for display on a CRT. Numeral 106 denotes a keyboard (which, however, may be a tablet or MDI), and 107 a keyboard control unit which receives variable values, entered by the keyboard 106, corresponding to variables #i (i=1,2...). Numeral 108 denotes a graphic display unit 108 which includes a display controller 108a, a cathode-ray tube (CRT) 108b, a refresh memory 108c for storing display data, and a pattern generating circuit 108d for generating a graphic on the basis of display data read out of the refresh memory 108c continuously through the display controller 108a. On the basis of display data read out of the shape data memory 105 via the controller and processor unit 101, the graphic display unit 108 displays a shape graphic, of the kind shown in Fig. 4, and at the same time presents a display of the variables #i (i=1,2...) that are to be entered from the keyboard 106. The entry of the variables may be facilitated by adopting an arrangement wherein the particular variable #i is displaying in blinking fashion, which blinking stops upon entry of the value for the variable.

In the present invention, values corresponding to the variables #i in a user macro are not designated by the numerical control program. More specifically, taking the case of Fig. 4 as an example, the user macro is created in the format of (1) through (7) as described earlier and is stored in the user macro registration memory 104. However, the user macro call instruction inserted in the numerical control program now has the form:

G65 P9801*

and therefore does not specify the values of the variables #1, #2, #3... as in the prior art. Instead, in accordance with the present invention, each of the values for the variables is entered from, e.g., the keyboard when the foregoing macro call instruction has been read.

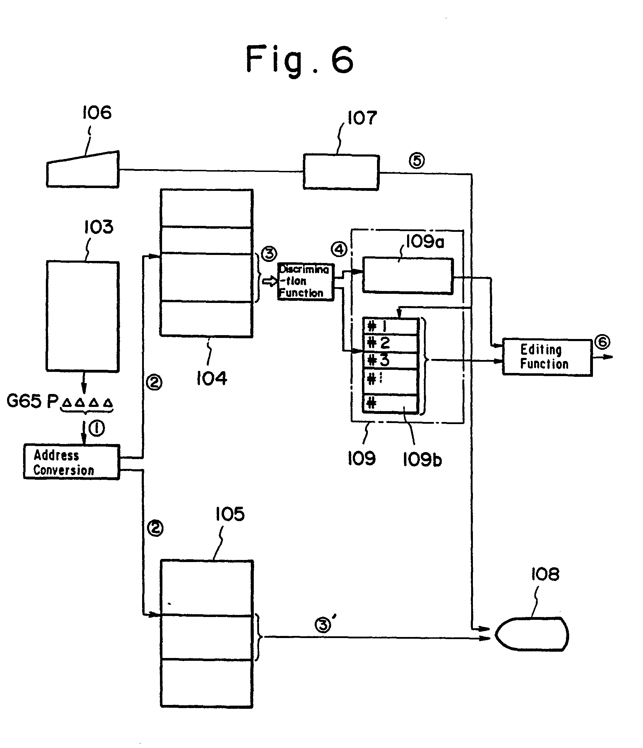

The operation of the present embodiment will be described next with reference to Fig. 6.

The operating mode (referred to as memory operation) for executing numerical control processing based on a numerical control program stored previously in the memory 103 is selected by a mode select key on the operator's panel, not shown. If this is followed by pressing a cycle start button, execution of numerical control processing will start. Numerical control data will therefore be called successively from the memory 103 so that processing may be performed in the usual manner. Processing proceeds in the following fashion:

① A user macro call instruction G65 P$_{\triangle\triangle\triangle\triangle}$* is read from the memory 103.

② Next, the numerical value (user macro number) of four digits following the letter of the alphabet P is converted into an address.

③' In response to the conversion into an address, the address giving the beginning of the corresponding user macro is designated in the user macro registration memory 104 and shape data memory 105. As a result, display data from the shape data memory 105 is delivered to the graphic display unit 108.

③ Concurrently, the user macro is read out of the user macro registration memory 104.

④ Upon receiving the input display data, the graphic display unit 108 displays, say, the graphic shown in Fig. 4 while the symbol #i (i=1,2...) representing a variable is made to appear in blinking fashion. Meanwhile, the user macro read out of the user macro registration memory 104 is stored in the user macro storage area 109a of a data memory 109 while it is discriminated whether the user macro includes variables and, if so, the number of these variables and their kind (amount of travel, feed speed, etc.). The user macro is stored in the user macro storage region 109b of the data memory at the same time.

⑤ Next, the operator enters the variables while viewing the graphic displayed on the graphic display unit 108 as well as his drawings giving the shape to be machined. More specifically, if we assume that the variable blinking on the screen is #3 (Fig. 4), then the operator, while observing his drawing of the actual machining shape, enters the actual dimension corresponding to #3 by means of a ten-key arrangement or the like, and then presses a transmit key. Pressing the transmit key causes the dimension entered using the ten-key to be stored, via the keyboard control circuit 107, in an area of the variable storage area 109b corresponding to #3. At the same time, the fact that the transmit key has been depressed is communicated to the graphic display unit which responds by causing the next variable symbol to blink.

⑥ The foregoing operations are repeated to complete the entry of the values for all variables. When this has been achieved, an executable user macro is perfected by the editing function of the processor by employing the user macro stored in the user macro registration memory 109a, as well as the values of the variables.

Thenceforth, numerical control processing based on the perfected user macro is executed by reading out the user macro from the beginning thereof.

According to the present invention as described above, it suffices to register in memory only one subprogram for workpieces having a similar geometrical shape, and it is unnecessary to create main programs for each of such workpieces even though the dimensions differ. When creating the main program, one need know only the function of the subprogram to be called and not the kind of variables involved. This simplifies programming immensely.

Furthermore, since undefined data (variables) can be entered by the operator while he converses with the graphic display unit, the entry of such data can be performed quickly and without error because the CRT indicates which portion of the workpiece the required numerical value relates to as well as which variable is to be entered next.

While the conventional subprograms and user macros are very useful in facilitating the application of GT (group technology) to parts, it is required that a separate main program be prepared each time the dimension of a part changes. By contrast, with the present invention it is unnecessary to remake the main program because of differences in dimensions, so that it is possible to apply GT of a wider scope and higher level.

It should be noted that the present invention is not limited to the case described hereinabove, wherein shape pattern data corresponding to user macros are stored beforehand in memory and graphics are displayed on the graphic display unit based on the shape pattern data. For example, an arrangement may be adopted wherein graphic data is created and displayed on the basis of a command, such as positional data, constituting a user macro. In such case, however, since dimensions are given in terms of variables, it will be necessary to convert the variables into constant values internally of the system.

As far as the CRT display method is concerned, it been described that the variable to be entered next is displayed in blinking fashion. However, the invention is not limited to such an arrangement and may be modified in various ways.

Further, it has been mentioned that the variables are dimensions, positions or amounts of travel. This does not pose a restriction upon the invention, however, as the variables may represent feed speed and other numerical values.

Thus, according to the present invention, it is possible to provide a numerical control method wherein it suffices to register only one subprogram for workpieces having a similar geometrical shape, and is unnecessary to create main programs for each of such workpieces even though the dimensions differ. The invention therefore has a high degree of industrial applicability as it enables a numerical control device to operate in an economical and precise manner.

**Claims**

1. A numerical control method wherein an input program conforming to a machining shape is entered, all or a portion of numerical values in said input program being designated by variables, and an executable program is perfected from said input program by entering a variable value corresponding to each of said variables in accordance with a desired final shape, numerical control program processing being executed on the basis of the perfected program, characterised in that the input program is a subprogram which is stored beforehand and conforms to a predetermined machining shape and the subprogram is called, during machining which is numerically controlled by a main numerical control program, in response to a call instruction inserted in the main numerical control program for that purpose, the call instruction also causing the predetermined machining shape and said variables to be displayed on a screen thereby to facilitate the entering of the variable values, numerical control processing being resumed on the basis of the subprogram when the subprogram has been perfected as aforesaid to define a machining shape which has a similar geometrical shape to the predetermined machining shape.

2. A numerical control method according to claim 1, wherein the predetermined machining shape is read out of a shape memory by the call instruction and is delivered to a graphic display unit to be displayed on said screen.

**Patentansprüche**

1. Numerisches Steuerverfahren, bei dem ein Eingangsprogramm, das mit einer auszuarbeitenden Form übereinstimmt, eingegeben wird, wobei alle oder ein Teil von numerischen Werten durch Variablen bestimmt sind und ein ausführbares Programm aus dem Eingangsprogramm in Übereinstimmung mit einer gewünschten endgültigen Form durch Eingeben eines Variablenwerts vervollständigt wird, der mit jeder der Variablen korrespondiert, und wobei eine Abarbeitung eines numerischen Steuerprogramms auf der Grundlage des vervollständigten Programms ausgeführt wird, dadurch gekennzeichnet, daß
— das Eingangsprogramm ein Unterprogramm ist, das vorab gespeichert ist und mit einer vorbestimmten auszuarbeitenden Form übereinstimmt,
— das Unterprogramm während eines Bearbeitungsvorgangs, der numerisch durch ein numerisches Hauptsteuerprogramm gesteuert wird, in Reaktion auf einen Aufrufbefehl aufgerufen wird, der in das numerische Hauptsteuerprogramm zu diesem Zweck eingefügt ist, wobei der Aufrufbefehl auch veranlaßt, daß die vorbestimmte auszuarbeitende Form und die Variablen auf einem Bildschirm angezeigt werden, um dadurch das Eingeben der Variablenwerte zu erleichtern, und
— die Abarbeitung der numerischen Steuerung auf der Grundlage des Unterprogramms fortgeführt wird, wenn das Unterprogramm wie angegeben vervollständigt worden ist, um eine auszuarbeitende Form zu definieren, die eine der vorbestimmten auszuarbeitenden Form ähnliche geometrische Form aufweist.

2. Numerisches Steuerverfahren nach Anspruch 1, bei dem die vorbestimmte auszuarbeitende Form aus einem Formspeicher durch den Aufrufbefehl ausgelesen wird und einer Graphikanzeigeeinheit übergeben wird, um die Form auf dem Bildschirm anzuzeigen.

**Revendications**

1. Un procédé de commande numérique dans lequel un programme d'entrée conforme à une forme d'usinage est entré, tout ou une partie des valeurs numériques dans ledit programme d'entrée étant désignées par des variables, et dans lequel un programme exécutable est parachevé à partir dudit programme d'entrée en entrant une valeur de variable correspondant à chacune desdites variables en conformité avec une forme finale désirée, un traitement de programme de commande numérique étant exécuté sur la base du programme parachevé, caractérisé en ce que le programme d'entrée est un sous-programme qui est mémorisé à l'avance et se conforme à une forme d'usinage prédéterminée et en ce que le sous-programme est appelé, durant l'usinage qui est commandé numériquement par un programme de commande numérique principal, en réponse à une instruction d'appel insérée dans le programme de commande numérique principal à cette fin, l'instruction d'appel amenant en outre la forme d'usinage prédéterminée et lesdites variables à être affichées sur un écran permettant de faciliter l'entrée des valeurs de variable, un traitement de commande numérique étant repris sur la base du sous-programme lorsque le sous-programme a été parachevé comme indiqué précédemment pour définir une forme d'usinage qui a une forme géométrique similaire à la forme d'usinage prédéterminée.

2. Un procédé de commande numérique selon la revendication 1, dans lequel la forme d'usinage prédéterminée est extraite par lecture d'une mémoire de forme par l'instruction d'appel et est envoyée à l'unité d'affichage graphique pour être affichée sur ledit écran.

# Fig. 1

# Fig. 2

# Fig. 3

# Fig. 4

# Fig.5

EP 0 079 388 B1

# Fig. 6